# EUROPEAN PATENT SPECIFICATION

(11) **EP 0 669 282 B1**
(45) Date of publication and mention of the grant of the patent: **24.03.1999**
(21) Application number: 94120430.7
(22) Date of filing: 22.12.1994
(51) Int. Cl.: C01B 15/10, C11D 3/39

(54) **A method for obtaining and coating sodium carbonate perhydrate to stabilize it in detergent compositions**
Verfahren zur Herstellung und zum Beschichten von in Detergenszusammensetzungen stabilen Natriumcarbonat-perhydrat
Procédé de production et d'enrobage de perhydrate de carbonate de sodium permettant d'en accroître la stabilité dans les compositions détergentes

(30) Priority: 25.02.1994 PL 30242894
(43) Date of publication of application: 30.08.1995
(73) Proprietor: INSTYTUT CHEMII NIEORGANICZNEJ, PL-44-101 Gliwice (PL)
(72) Inventor: Stechman, Marta, 44-100 Gliwice (PL); Najda, Jerzy, 44-100 Gliwice (PL); Piwowarski, Michal, 44-100 Gliwice (PL); Rozycka, Danuta, 44-100 Gliwice (PL)
(74) Representative: von Füner, Alexander, Prof.h.c. Dr.

(56) References cited:
- EP-A- 0 070 711
- FR-A- 2 159 301
- FR-A- 2 407 172
- US-A- 4 171 280
- DATABASE WPI Week 8930, Derwent Publications Ltd., London, GB; AN 89-216380 & JP-A-1 153 510 (NIPPON PEROXIDE KK ET AL.) 15 June 1989

## Description

The invention relates to a method for obtaining a softening-bleaching agent used as a component in detergents and cleaning agents.

Components of detergents and cleaning agents are mostly builders, co-builders, surfactants, bleaching agents and fillers. Sodium tripolyphosphate, sodium aluminosilicates, sodium citrate, sodium nitrilotriacetate and soap are used as builders, whereas calcined soda, sodium silicates, **polycarboxylates, phosphonates and sodium** ethylenediaminetetraacetate as co-builders. As surfactants both anionic and non-anionic agents are used. As a bleaching agent sodium perborate is mostly used.

The aforenamed component groups play a definite role in a detergent formula and are necessary for obtaining a desired washing effect. Hitherto, co-builders and bleaching agents were introduced into detergent blends separately which was not conducive to active oxygen stability in detergent during its manufacturing process or storing, because active oxygen stabilization requires a close contact between stabilizer and active-oxygen-containing substance particles. Some co-builders display stabilizing action when added in the form of previously prepared mixture of co-builder and bleaching agent, especially when using bleaching agents of low active oxygen stability.

A method for the preparation of a detergent component blend to be introduced into a detergent is known in the art.

A method for the manufacture of an active agent for detergent blends, based on alkali metal silicates is described in the European Patent No 488 868. It involves sputtering deposition of alkali metal silicate solution onto solid sodium carbonate with the obtained semi-product being subjected to a complex co-granulation process. This process necessitates the use of a complex production plant, too. The obtained product has softening properties only.

US-A-4,171,280 discloses a powder bleach composition comprising a plurality of particles comprising sodium per-carbonate obtained by contacting sodium carbonate particles with a spray of a solution of hydrogen peroxide. Sodium silicate can be added to the composition.

FR-A-2,159,301 discloses a process for stabilization of sodium percarbonate, wherein sodium percarbonate containing 1 to 10 weight-% water is mixed with finely dispersed silicic acid and subsequently dried.

The object of the present invention is to obtain a combined blend formula containing a bleaching agent as well as co-builders which at the same time can serve as active oxygen stabilizers and have corrosion-inhibiting properties on laundry equipment.

During research to find such a blend it unexpectedly became evident that combined blend having a composition according to the invention, apart from producing the desired effect, also has properties typically attributed to builders, i.e. it softens water and shows a buffering action on washing-bath pH, so it can be used as a partial substitute for sodium tripolyphosphate.

The method according to the invention involves wetting sodium carbonate of a grain size ranging from 0.05 to 20 mm with 6 - 60% wt. hydrogen peroxide solution and then coating it with powdery alkali metal silicate of a molar ratio from 0.9 to 3.6. This results in a softening agent combining with a bleaching agent as early as during the process of blend fabrication which insures a stabilization of active oxygen. The product contains active oxygen combined additively with sodium carbonate as well as with sodium silicate.

By changing the proportions of the individual components in the blend its content of active oxygen as well as release of active oxygen at selected temperatures can be controlled.

At present, expensive activators are used in detergent formulas, such as tetraacetylethylenediamine (TAED), in order to control the active oxygen release temperature in a detergent bath.

The most preferable softening-bleaching properties of the product can be obtained when alkali metal silicate content in the product is maintained within the limits of 15 - 35% wt and of active oxygen - from 1 to 10% wt.

The agent according to the invention is environmental friendly since it contains neither phosphates causing eutrophication of natural waters nor zeolites forming deposits in sewage conduits and lake bottoms. Moreover, the blend formula according to the invention does not contain boron compounds harmful to the environment which are used in the presently produced detergents, being a source of municipal wastewater pollution.

## Claims

1. A method for obtaining a softening-bleaching agent used as a component in detergents and cleaning agents, based on sodium carbonate, hydrogen peroxide and alkali metal silicates, characterized in that sodium carbonate of grain size ranging from 0.05 mm to 20 mm is wetted with hydrogen peroxide solution of 6 - 60% wt concentration and then coated by powdery alkali metal silicate of 0.9 - 3.6 molar ratio to give the product containing 15-35% wt of said silicate.

## Patentansprüche

1. Verfahren zur Herstellung eines als Komponente in Tensiden und Waschmitteln verwendeten Weichspülers und Bleichmittels auf der Basis von Natriumcarbonat, Wasserstoffperoxid und Alkalimetallsilikaten, dadurch gekennzeichnet, daß das Natriumcarbonat, das eine Korngröße im Bereich zwischen 0,05 mm und 20 mm besitzt, mit einer 6 bis 60 gew.-%igen Wasserstoffpeoxidlösung befeuchtet wird und dann mit pulverförmigem Alkalimetallsilikat in einem molaren Verhältnis von 0,9 - 3,6 beschichtet wird, um das 15-35 Gew.-% des Silikats umfassende Produkt zu bilden.

## Revendications

1. Procédé pour obtenir un agent de blanchiment et adoucissement utilisé comme une composante dans des détergents et agents de lavage à base de carbonate de sodium, peroxide d'hydrogène et des silicates alcalins caractérisé en ce que le carbonate de sodium ayant une granulométrie comprise entre 0,05 mm et 20 mm est mouillé avec une solution de 6-60 % (p/p) de peroxide d'hydrogène, puis recouvert d'une couche du silicate alcalin sous forme de poudre avec un rapport molaire de 0,9-3,6 afin de former le produit contenant 15-35 % (p/p) dudit silicate.
